# FASCICULE DE BREVET EUROPEEN

(11) **EP 0 483 011 B1**
(45) Date de publication et mention de la délivrance du brevet: **17.01.1996**
(21) Numéro de dépôt: 91402851.9
(22) Date de dépôt: 25.10.1991
(51) Int. Cl.: E05F 15/16, E05F 11/40, E05F 11/42, H02K 7/14

(54) **Fenêtre de véhicule mue électriquement**
Elektrisch verstelltes Fahrzeugfenster
Electrically displaced vehicle window

(30) Priorité: 25.10.1990 DE 4033949
(43) Date de publication de la demande: 29.04.1992
(73) Titulaire: SAINT-GOBAIN VITRAGE, F-92400 Courbevoie (FR); VEGLA Vereinigte Glaswerke GmbH, D-52066 Aachen (DE)
(72) Inventeur: Kunert, Heinz, W-5000 Köln 41 (DE); Ohlenforst, Hans, W-5100 Aachen (DE)
(74) Mandataire: Eudes, Marcel

(56) Documents cités:
- FR-A- 2 473 101
- FR-A- 2 475 469
- US-A- 4 939 867

## Description

L'invention a pour objet un ensemble de fenêtre de véhicule dont le vitrage est mû par un moteur électrique monté sur lui et coopérant avec une transmission disposée à l'intérieur de la paroi du véhicule ou du caisson d'une portière. Un ensemble de fenêtre semblable est connu du document US-A-4 939 867.

Sur les fenêtres à moteur électrique de véhicules, en particulier les fenêtres de portières à vitres montantes et descendantes, le moteur est couramment monté fixe à l'intérieur de la paroi ou du caisson de la portière. Son mouvement d'entraînement est transmis au vitrage, monté mobile sur des glissières latérales, par des arbres, bielles, leviers ou câbles. La force motrice s'applique en règle générale à ce vitrage par l'intermédiaire d'un profilé en U pincé sur son bord inférieur ou collé sur lui ; il est aussi connu d'y fixer la pièce qui lui transmet l'effort à l'aide d'un ou plusieurs boulons traversant des trous percés à travers lui.

Il est également déjà connu (EP-A-0 384 685) de dessiner le mécanisme de façon que le moteur électrique soit fixé sur le vitrage, donc se meuve avec lui dans un sens et dans l'autre en coopérant avec un arbre monté à l'intérieur du caisson ; le moteur sera alors fixé sur une des faces du vitrage. Cette disposition exige de réserver à l'intérieur du caisson une place importante pour son passage ; pour le fixer, il faut aussi prévoir des moyens et, le cas échéant, des perçages complémentaires sur le vitrage.

Le brevet US-A-4 389 818 décrit une fenêtre descendante de véhicule automobile dont le moteur électrique est monté sur un support débordant vers le bas au delà du bord de la vitre. La fabrication d'une vitre munie localement d'une telle pièce sur son bord se heurte toutefois à des difficultés. Le moteur peut certes, selon une des versions décrites, être placé le long du bord sensiblement à cheval sur le plan du vitrage, ce mode de fixation exige pourtant de nouveau des organes mécaniques accessoires de fixation.

Sur une fenêtre de véhicule mue par un moteur électrique monté sur le vitrage, l'invention se propose de simplifier fixation du moteur et transmission de ses efforts et, pour y parvenir, prévoit de disposer ce moteur, en partie ou en totalité, dans un trou pratiqué dans le vitrage, et de fixer directement ledit moteur sur le bord dudit trou.

Cette disposition selon l'invention permet de réduire l'encombrement car une part importante du moteur prend place à l'intérieur du volume en question ; d'autre part elle permet de fixer ce moteur simplement, surement et durablement. Une fenêtre de véhicule selon l'invention a aussi pour avantage que s'il n'existe pas de glissière sur les côtés de la baie, la vitre ainsi amenée à se prolonger vers le bas au delà du moteur reste bien guidée et maintenue.

Il existe plusieurs manières de mettre en oeuvre l'invention. On peut par exemple mettre en place des moteurs électriques tournants en forme de disques plats dont le rotor possède un axe porteur d'un pignon qui coopère avec un organe de transmission installé dans la paroi du véhicule ou le caisson de la portière. Ce dernier peut être une crémaillère ou un arbre fileté coopérant avec un écrou mené monté sur le bâti du moteur. Au lieu d'un moteur rotatif, on peut encore employer un moteur linéaire coopérant avec un rail conducteur, de cuivre en particulier, monté à demeure dans la paroi ou le caisson de portière.

Différents exemples de l'invention sont illustrés en détail par les dessins, qui montrent :
- figure 1 : une portière de véhicule équipée d'un vitrage descendant selon l'invention,
- figure 2 : un détail agrandi de l'entraînement motorisé représenté sur la figure 1,
- figure 3 : un détail, en coupe partielle, d'un entraînement utilisant une crémaillère,
- figure 4 : un dispositif où le rotor du moteur coopère directement avec un arbre fileté,
- figure 5 : une variante à moteur linéaire.

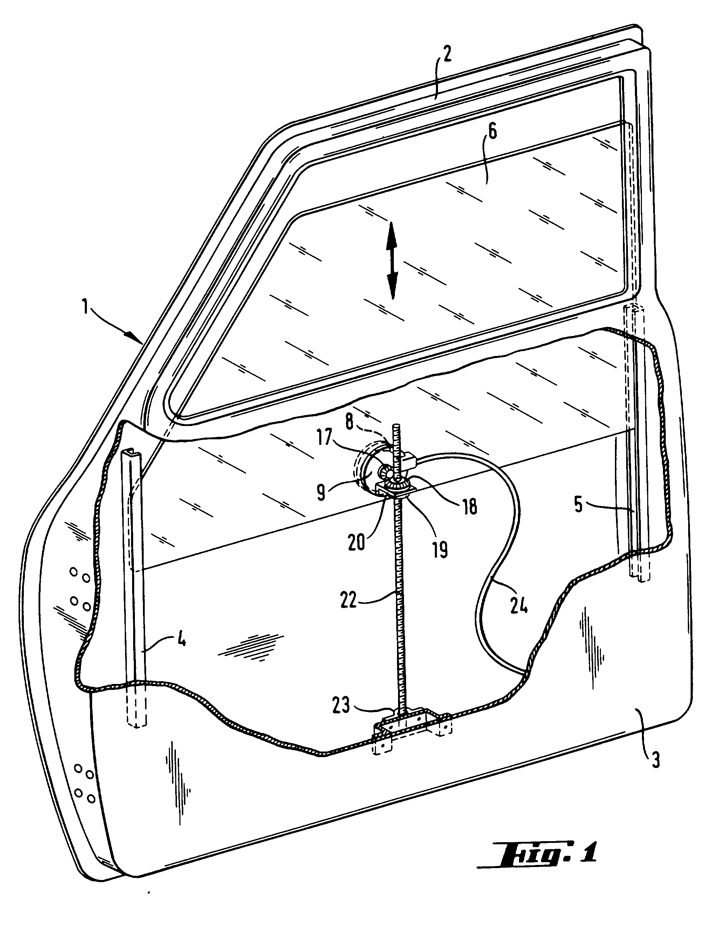

La fenêtre de véhicule 1 représentée sur la figure 1 comprend une partie supérieure 2 encadrant la baie et une partie inférieure 3 constituant le caisson d'une portière. Dans ce caisson sont montées latéralement des glissières 4 et 5 sur lesquelles le vitrage 6 coulisse verticalement.

Un trou 8 est pratiqué dans le vitrage 6, au voisinage de son bord inférieur. La forme et les dimensions de ce trou sont adaptées à celles du moteur électrique 9 qui s'y trouve inséré. On peut pratiquer le trou 8, à la forme désirée, à l'aide de machines de découpe connues, à jet d'eau sous haute pression chargé d'abrasif. Ceci se fait avant trempe thermique du volume par chauffage à la température de trempe et refroidissement brusque.

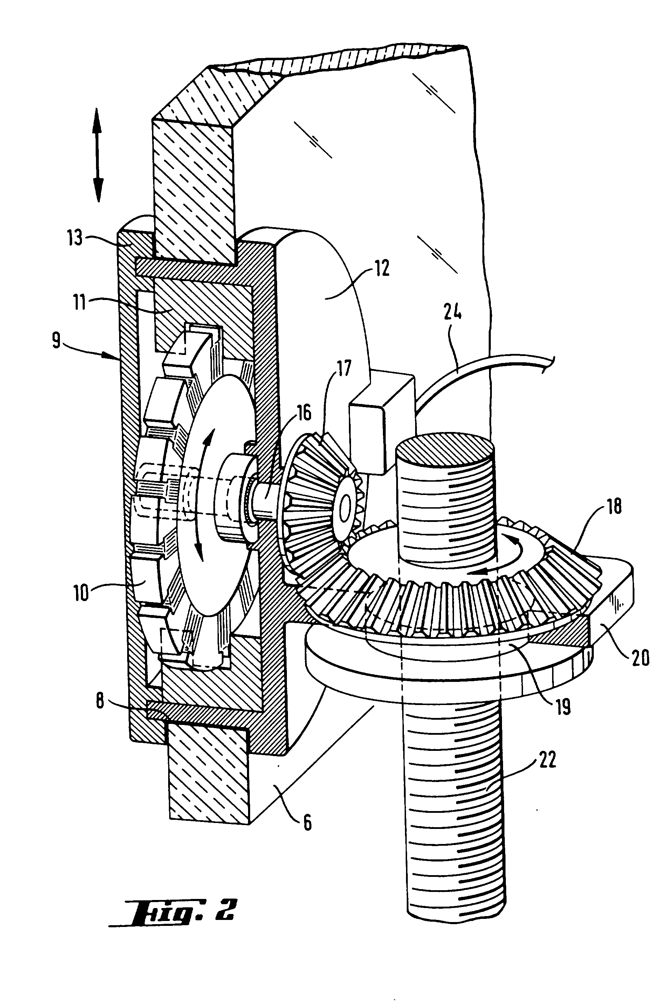

Le moteur électrique 9 est de construction particulièrement plate, il s'agit en particulier d'un moteur à disque tournant tel que la figure 2 le montre schématiquement. Le rotor revêt la forme d'un disque plat 10 qui coopère avec l'enroulement statorique 11 ou encore avec des aimants permanents ; de tels moteurs, aptes à s'insérer ainsi, sont disponibles dans le commerce. Les deux parties 12 et 13 de leur boîtier sont dessinées de façon qu'elles permettent de placer le moteur dans le trou 8 du vitrage 6 en les serrant l'une sur l'autre après les avoir posées sur ce dernier.

Sur l'arbre 16 du rotor est monté un pignon conique 17 qui, au besoin après interposition d'un train réducteur non représenté, engrène sur un pignon conique 18 appartenant, lui, à un écrou 19 monté fou sur une console 20 solidaire de la partie 12 du boîtier. Le filet interne de l'écrou 19 coopère avec celui d'un arbre fileté 22 disposé dans une direction sensiblement verticale à l'intérieur du caisson 3 sur lequel une fixation 23 le retient à sa partie inférieure. Un câble souple 24 alimente le moteur 9 dont la mise en route fait coulisser le vitrage dans la direction désirée par déplacement de l'écrou 19 le long de l'arbre 22.

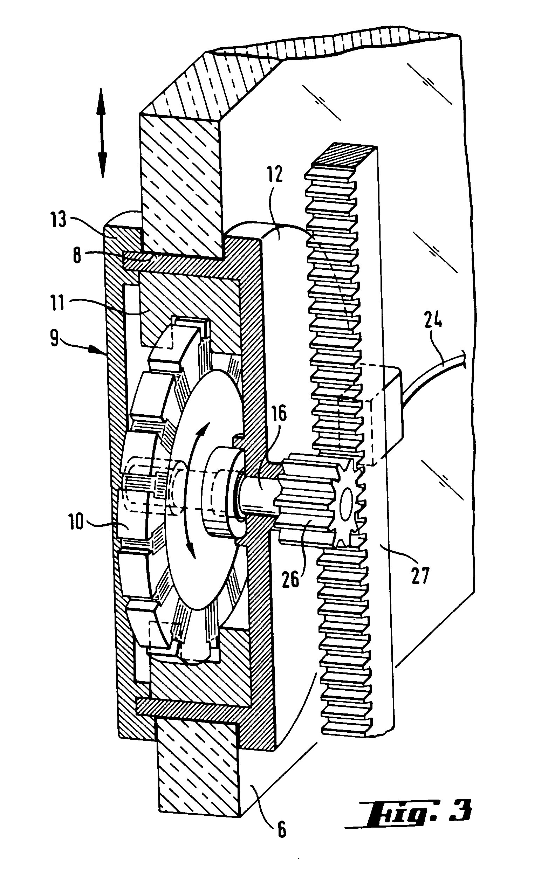

La forme d'exécution de l'entraînement du vitrage 6 montrée par la figure 3 comporte encore un moteur électrique 9 possédant un boîtier en deux parties 12 et 13 serrées l'une sur l'autre, un rotor à disque 10, un stator 11 et un axe 16, portant cette fois un pignon 26 qui coopère avec une crémaillère 27, elle-même fixée sur le caisson. Le moteur est encore alimenté par un câble souple 24.

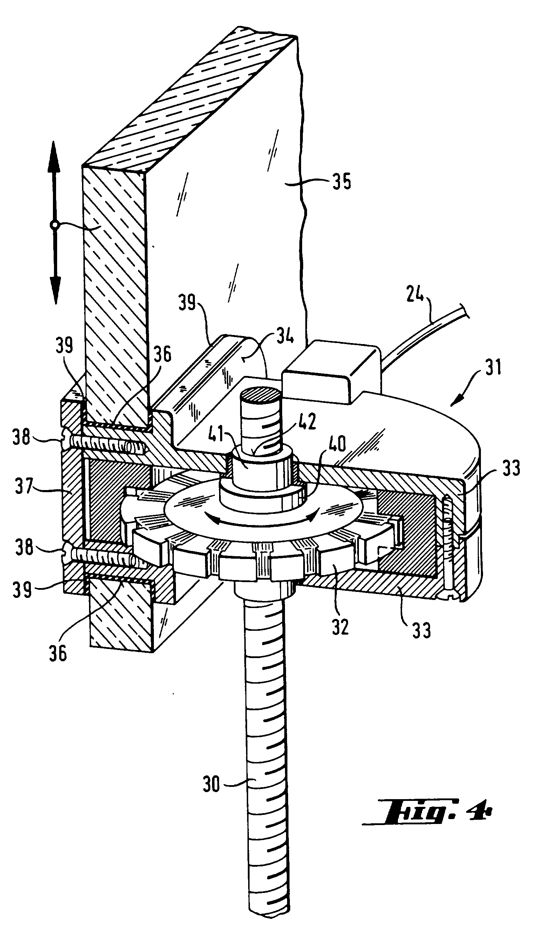

Le mode d'exécution de la figure 4 a pour avantage de n'exiger aucun engrenage entre l'arbre fileté 30 et le moteur 31 car le rotor 32 de ce moteur coopère directement lui-même avec l'arbre. Le moteur 31 est alors dessiné de façon que son rotor tourne dans un plan horizontal, son axe coïncidant avec celui de l'arbre 30. Son boîtier 33 porte latéralement une bride 34 qui vient en appui sur la vitre 35 tandis que son extrémité dépassante pénètre dans le trou 36 de cette dernière, sur laquelle une platine 37 serrée par des vis 38 le fixe après interposition classique d'un joint élastique 39. Le moyeu 40 du rotor 32 repose sur le boîtier par des paliers 41 tandis que sa portée interne filetée 42 fait écrou sur l'arbre 30.

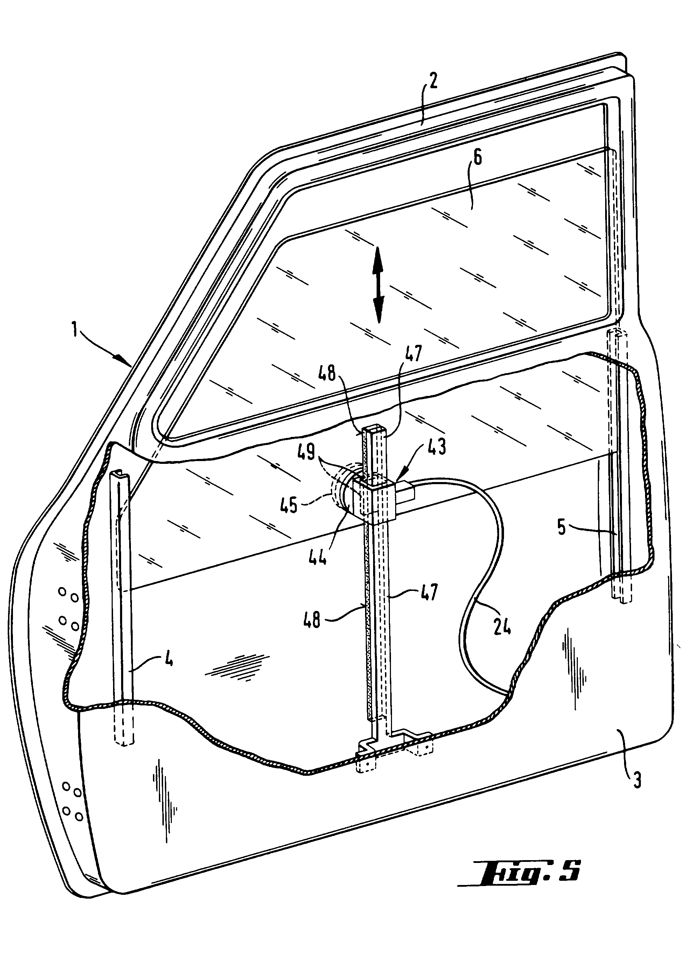

La version de la figure 5 emploie un moteur linéaire 43 dont le boîtier est fixé comme le boîtier 33 du moteur 31 par une bride 44 et une contreplaque 45 dans le trou du vitrage 46. Ce boîtier est monté coulissant sur un rail 47 portant une plaque conductrice en cuivre 48. L'inducteur 49 du moteur, logé dans le trou, coopère avec cette plaque 48, qui joue le rôle d'induit pour déplacer le moteur, entraînant le vitrage vers le haut ou vers le bas le long du rail 47 quand le moteur est alimenté dans un sens ou dans l'autre par le câble 24.

## Revendications

1. Ensemble de fenêtre de véhicule dont le vitrage (6, 35) est mû par un moteur électrique (9, 31, 43) monté sur lui et coopérant avec une transmission disposée à l'intérieur de la paroi du véhicule ou du caisson d'une portière, caractérisée en ce que ce moteur (9, 31, 43) est disposé, en partie ou en totalité, dans un trou (8, 36) pratiqué dans le vitrage (6, 35), et fixé directement sur le bord dudit trou.

2. Ensemble de fenêtre selon la revendication 1, caractérisée en ce qu'un moteur électrique (9) d'axe de rotation perpendiculaire au plan du vitrage (6), est fixé au bord du trou (8, 36) par l'intermédiaire de deux parties (12, 13) (13) d'un boitier, et agit par l'intermédiaire d'un engrenage conique (17, 18) sur un écrou (19) coopérant avec un arbre fileté (22) monté à l'intérieur de la paroi du véhicule ou du caisson (3) de portière.

3. Ensemble de fenêtre selon la revendication 1, caractérisée en ce qu'un moteur électrique (9) d'axe de rotation perpendiculaire au plan du vitrage (6) est fixé au bord du trou (8, 36) par l'intermédiaire de deux parties (12, 13) (13) d'un boitier, et coopère par l'intermédiaire d'un pignon (26) avec une crémaillère (27) montée à l'intérieur de la paroi du véhicule ou du caisson de portière.

4. Ensemble de fenêtre selon la revendication 1, caractérisée en ce que dans le trou (36) du vitrage (35) est monté un moteur électrique (31) d'axe de rotation parallèle au plan de celui-ci, dont le rotor (32) possède un moyen (40) muni d'une portée interne filetée (42) qui fait directement écrou sur un arbre (30) monté à l'intérieur de la paroi du véhicule ou du caisson de portière, ledit moteur étant enfermé dans un boitier (33) qui porte une bride (34) prenant appui sur l'une des faces du vitrage (35), l'extrémité dudit boitier passant dans le trou (36) et étant fixée au moyen d'une platine par des vis (38) contre l'autre face du vitrage (35).

5. Ensemble de fenêtre selon l'une des revendications 1 à 4, caractérisée en ce que le moteur est un moteur à rotor à disque de forme plate (9, 31).

6. Ensemble de fenêtre selon la revendication 1, caractérisée en ce que le moteur est un moteur linéaire (43) coopérant avec un rail conducteur (47) monté à demeure dans la paroi ou le caisson (3) de portière.

## Patentansprüche

1. Fenstereinheit für ein Fahrzeug, deren Glasscheibe (6,35) durch einen Elektromotor (9,31,43) bewegt wird, der auf der Glasscheibe angeordnet ist und mit einem im Innern der Fahrzeugwand oder innerhalb des Türschachts angeordneten Kraftübertragungselement zusammenwirkt, **dadurch gekennzeichnet,** daß der Motor (9,31,43) ganz oder teilweise in einem in der Glasscheibe (6,35) angebrachten Loch (8,36) angeordnet und unmittelbar auf dem Rand des Loches befestigt ist.

2. Fenstereinheit nach Anspruch 1, dadurch gekennzeichnet, daß ein Elektromotor (9) mit senkrecht zur Ebene der Glasscheibe (6) angeordneter Drehachse am Rand des Loches (8,36) unter Zwischenschaltung von zwei Teilen (12,13) eines Gehäuses befestigt ist und über ein Kegelradgetriebe (17,18) auf eine Spindelmutter (19) wirkt, die mit einer im Innern der Fahrzeugwand oder des Türschachtes (3) angeordneten Spindel (22) zusammenwirkt.

3. Fenstereinheit nach Anspruch 1, dadurch gekennzeichnet, daß ein Elektromotor (9) mit senkrecht zur Ebene der Glasscheibe (6) angeordneter Drehachse am Rand des Loches (8,36) unter Zwischenschaltung von zwei Teilen (12,13) eines Gehäuses befestigt ist und über ein Ritzel (26) mit einer im Innern der Fahrzeugwand oder des Türschachts angeordneten Zahnstange (27) zusammenwirkt.

4. Fenstereinheit nach Anspruch 1, dadurch gekennzeichnet, daß in dem Loch (36) der Glasscheibe (35) ein Elektromotor (31) mit einer parallel zur Scheibenebene verlaufenden Drehachse angeordnet ist, dessen Rotor (32) einen mit einem Innengewinde (42) versehenen Teil (40) aufweist, der unmittelbar die mit einer im Innern der Fahrzeugwand oder des Türschachtes angeordneten Spindel (30) zusammenwirkende Spindelmutter bildet, wobei der Motor in einem Gehäuse (33) angeordnet ist, das mit einem Flansch (34) versehen ist, der sich auf einer der Oberflächen der Glasscheibe (35) abstützt, wobei das Ende des Gehäuses in die Ausnehmung (36) hineinragt und mit Hilfe einer Platte durch Schrauben (38) gegen die andere Oberfläche der Glasscheibe (35) verspannt ist.

5. Fenstereinheit nach einem der Ansprüche 1 bis 4, dadurch gekennzeichnet, daß der Motor ein flach gebauter Scheibenläufermotor (9,31) ist.

6. Fenstereinheit nach Anspruch 1, dadurch gekennzeichnet, daß der Motor ein Linearmotor (43) ist, der mit einer in der Fahrzeugwand oder dem Türschacht (3) dauerhaft angeordneten Führungsschiene (47) zusammenwirkt.

## Claims

1. Window assembly for vehicle, the pane (6, 35) of which is moved by an electric motor (9, 31, 43) mounted on it and cooperating with a transmission disposed inside the wall of the vehicle or the casing of a door, characterized in that this motor (9, 31, 43) is disposed, partly or wholly, in a hole (8, 36) formed in the pane (6, 35), and fixed directly to the edge of said hole.

2. Window assembly according to Claim 1, characterized in that an electric motor (9) having its rotational axis perpendicular to the plane of the pane (6) is fixed to the edge of the hole (8, 36) by means of two parts (12, 13) of a casing, and acts through the intermediary of a bevel gear system (17, 18) on a nut (19) cooperating with a threaded shaft (22) mounted inside the wall of the vehicle or of the door casing (3).

3. Window assembly according to Claim 1, characterized in that an electric motor (9) having its rotational axis perpendicular to the plane of the pane (6) is fixed to the edge of the hole (8, 36) by means of two parts (12, 13) of a casing, and cooperates through the intermediary of a pinion (26) with a toothed rack (27) mounted inside the wall of the vehicle or the door casing.

4. Window assembly according to Claim 1, characterized in that, in the hole (36) of the pane (35) there is mounted an electric motor (31) having its rotational axis parallel to the plane of the pane, the rotor (32) of which motor has a hub (40) provided with an internal threaded surface (42) which acts directly as a nut on a shaft (30) mounted inside the wall of the vehicle or the door casing, said motor being enclosed in a casing (33) which carries a flange (34) bearing on one of the faces of the pane (35), the end of said casing passing through the hole (36) and being fixed by means of a plate by screws (38) against the other face of the pane (35).

5. Window assembly according to one of Claims 1 to 4, characterized in that the motor is a motor having a flat, disc-shaped rotor (9, 31).

6. Window assembly according to Claim 1, characterized in that the motor is a linear motor (43) cooperating with a conductor rail (47) mounted fixed in the wall or in the door casing (3).
